# EUROPÄISCHE PATENTSCHRIFT

(11) **EP 0 271 441 B1**
(45) Veröffentlichungstag und Bekanntmachung des Hinweises auf die Patenterteilung: **07.01.1993**
(21) Anmeldenummer: 87810698.8
(22) Anmeldetag: 26.11.1987
(51) Int. Cl.: B60P 1/44

(54) **Ladebordwand mit einem stranggepressten Profil in Form einer Hohlfachplatte**
Loading tailgate with an extruded profile in the shape of a plate having hollow box sections
Plate-forme de chargement avec un profil extrudé sous forme d'un plateau ayant des caissons creux

(30) Priorität: 09.12.1986 DE 8632891 U
(43) Veröffentlichungstag der Anmeldung: 15.06.1988
(73) Patentinhaber: ALUSUISSE-LONZA SERVICES AG, 8034 Zürich (CH)
(72) Erfinder: Graf, Werner, D-7707 Engen (DE)

(56) Entgegenhaltungen:
- DE-A- 3 107 715
- DE-B- 1 917 192
- DE-C- 2 801 831
- DE-U- 7 809 142
- DE-U- 8 632 891
- US-A- 3 666 123

## Beschreibung

Die Erfindung betrifft eine Ladebordwand mit einem stranggepreßten Profil in Form einer Hohlfachplatte, die zwischen einer oberen und einer unteren Profilwand durch Querwände begrenzte Hohlräume aufweist, insbesondere eine Ladebordwand mit sich zu einer Auflagekante verjüngendem Längsschnitt mit wenigstens einer in der Fahrfläche vorgesehenen Rastmulde od.dgl. und einer diese in einer Ruhelage überdeckenden Sicherungsklappe als Abrollsicherung, wobei letztere quer zur Abrollrichtung zur zeitweiligen Aufnahme eines Teiles eines zu sichernden Ladegutes, beispielsweise einer Rolle, unter Verschwenken aus der Fahrfläche in dieser die Rastmulde freigibt.

Eine derartige Ladebordwand bzw. eine Plattform dafür ist der DE-C-28 01 831 zu entnehmen, bei der zwei einander benachbarte Sicherungsklappen vorgesehen und diese ihrerseits als Hohlprofile ausgebildet sind. Die Unterseiten dieser Hohlprofile sind gekrümmt und zur Ueberführung aus der Ruhelage in die Sicherungsstellung auf einer zur Fahrfläche der Bordwand versetzten Fläche abrollbar. Der Zugang zu letzterer wird dadurch erreicht, daß man einen Teil der Fahrfläche nach dem Ausformen des Plattformprofils z.B. durch einen Fräsvorgang entfernt.

Außerdem ist durch die DE-B-19 17 192 eine Sicherungsklappe bekanntgeworden, welche als zweiarmiger Hebel ausgebildet ist, dessen einer Arm beim Auffahren wenigstens einer Rolle des Ladegutes nach unten verschwenkt und zusammen mit einer festen Kante oder Fläche oder mit einer weiteren, in geringem Abstand von ihr gelagerten Sicherungsklappe die bereits genannte Vertiefung für die Rolle bildet.

In Kenntnis dieses Standes der Technik hat sich der Erfinder das Ziel gesetzt, eine Ladebordwand der eingangs erwähnten Art mit einer besonders einfach gestalteten Abrollsicherung zu versehen und vor allem eine Schwächung der verwendeten Hohlfachplatte durch die teilweise Entfernung der oberen Profilwand zu vermeiden; ein solches Ausfräsen od.dgl. kann bei schmalen Profilen zu einer unerwünschten Schwächung des Profilquerschnittes führen. Darüberhinaus soll nicht nur die Herstellung der Ladebordwand vereinfacht werden, sondern auch deren Zusammenbau, um diesen auch außerhalb des Herstellungsbetriebes und auch durch Hilfskräfte zu ermöglichen.

Zur Lösung dieser Aufgabe führt, daß die obere Profilwand eine querschnittlich stufenartige Vertiefung als Rastmulde aufweist, die zur unteren Profilwand durch einen stranggepreßten Boden begrenzt ist, wobei an die der Auflagekante nähere Seitenwand der Vertiefung eine hinterschnittene Nut kreisförmigen Innenquerschnittes parallel angeformt ist und die Lage einer Gelenkachse für die an das Profil angelenkte Sicherungsklappe/n bestimmt. Darüberhinaus sollen in der Seitenwand Einschnitte vorgesehen werden, welche die hinterschnittene Nut durchgreifen und zungenartige Abschnitte eines Klappenprofiles als Sicherungsklappe aufnehmen, dessen/deren Abschnitte einen rohrartigen Hohlraum aufweisen, welcher in Einbaulage des Profiles mit dem Innenquerschnitt der hinterschnittenen Nut fluchtet und mit ihr von einem Achsbolzen als Gelenkachse durchsetzt ist.

Dank dieser Maßgaben entsteht eine Ladebordwand, die nach dem Strangpressen nicht mehr verletzt werden muß -- mit Ausnahme sehr schmaler Einschnitte, in welche jene zungenartigen Abschnitte des Klappenprofiles eingesetzt werden. Der Boden der Vertiefung ist ebenso wie die Aufnahmenut für die Gelenkachse Teil des fertigen stranggepreßten Profils, einer zusätzlichen Bearbeitung bedarf es -- von der obengenannten Ausnahme abgesehen -- nicht mehr. Zudem nimmt die Vertiefung selbst die Rolle od.dgl. auf - nach dem Stande der Technik bilden Klappenteile diese Vertiefung.

Das Klappenprofil ist -- entweder aus Aluminium stranggepreßt oder aus Kunststoff geformt -- mit einer rohrartigen Anformung versehen, die erfindungsgemäß zur Bildung der zungenartigen Abschnitte teilweise entfernt wird. Diese Abschnitte werden in die Einschnitte des Profiles eingesetzt, bis ein hindurchgeschobener Achsbolzen beide Profile miteinander verbinden kann. Es entsteht erkennbar eine sehr einfache Konstruktion großer Haltbarkeit.

Es leigt im Rahmen der Erfindung, daß die Klappenprofile in Abständen zueinander angeordnet sind, wobei der dadurch entstehende Zwischenraum durch plattenartige Einsätze überbrückt ist, welche fest in der Plattform verankert sind.

Auch die Einsatzplatten sind bevorzugt -- wie auch das Profil -- aus Leichtmetall stranggepreßt, können jedoch ebenso aus Kunststoff gefertigt sein.

Um ein Klappern der Klappenprofile in Ruhelage zu verhindern, ist erfindungsgemäß zwischen dem Klappenprofil und dem Boden der Vertiefung eine Dämpfungseinlage vorgesehen, bevorzugt ein Gummiprofil in einer Klemmnut.

Es entsteht eine aufgabengemäß einfache Ladebordwand, welche problemlos herzustellen, zusammenzubauen und zu warten ist.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: eine Seitenansicht eines erfindungsgemäßen Profils;
- Fig. 2:: einen Teil der Fig. 1 in vergrößerter Wiedergabe;
- Fig. 3:: eine gegenüber Fig. 1 und Fig. 2 verkleinerte Draufsicht auf einen Teil des Profils.

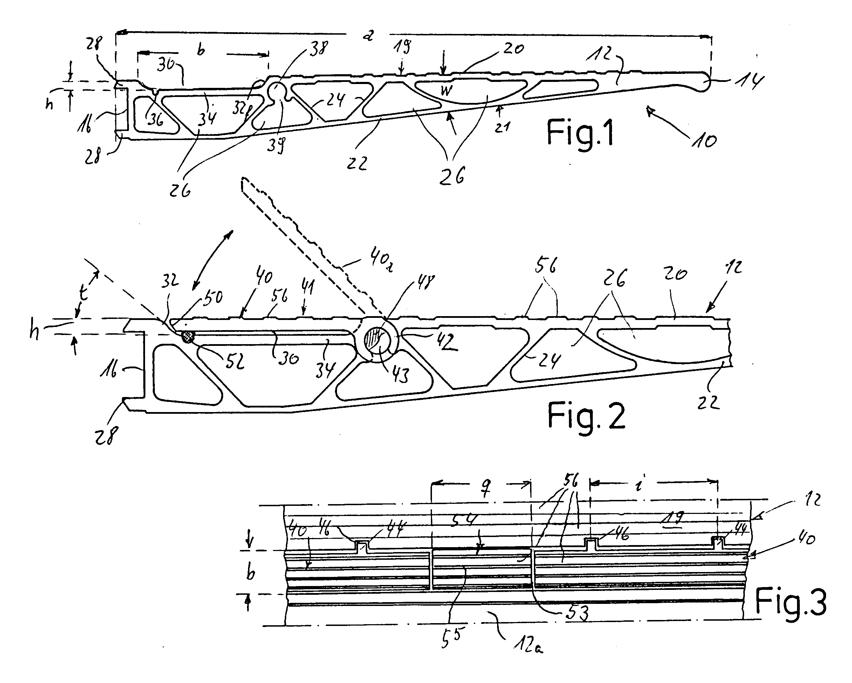

Eine Plattform 10 einer Ladebordwand für ein aus Gründen der Uebersichtlichkeit in der Zeichnung nicht dargestelltes Fahrzeug weist ein aus einer Aluminiumlegierung stranggepreßtes Profil 12 in Form einer Hohlfachplatte konischen Längsschnittes einer Breite a auf; dieses Profil 12 erweitert sich von einer Querschnittlich zungenartigen Auflagekante 14 ab zu einer -- in Fig. 1 links liegenden -- Längswand 16 so, daß die Profiloberfläche 19 einer oberen Profilwand 20 mit der Außenseite 21 einer unteren Profilwand 22 einen spitzen Winkel w einschließt. Zwischen den beiden Profilwänden 19, 21 begrenzen geneigte Querwände 24 Hohlfächer oder Profilkammern 26.

Das an seiner Längskante 42 angelenkte Klappenprofil 40 leigt in der in Fig. 2 dargestellten Ruhelage an seiner freien Längskante 50 einem Gummiprofil 52 auf, welches in die Klemmnut 36 des Vertiefungsbodens 34 eingesetzt ist. In dieser Ruhelage bilden die Oberflächen der Klappenprofile 40 mit der Plattformoberfläche 19 eine Fahrfläche. Das Klappenprofil ist gemäß Kontur 40ₐ in Fig. 2 aus seiner Ruhelage in eine geneigte Sicherungsstellung zu überführen, in der es eine nicht gezeigte Transportlast gegen ein Verschieben oder Abrollen zur Auflagekante 14 hin sichert.

Fig. 3 ist zu entnehmen, daß die Klappenprofile 40 in Abstand q zueinander angeordnet sind. Der so vorhandene Zwischenraum 53 nimmt in der Vertiefung 30 festliegende Einsatzplatten 54 auf, die -- wie auch Klappenprofil 40 und Profilwand 20 -- mit aufragenden Profilrippen 56 als Rutschsicherungen ausgestattet sind. Die Oberfläche 55 der Einsatzplatte 54 fluchtet mit der Oberfläche 19 des Profils 12.

Die Einsatzplatte 54 kann, wie auch Profil 12, aus einer Aluminiumlegierung bestehen oder aber aus Gummi bzw. Kunststoff. Auch das Klappenprofil 40 ist bevorzugt ein stranggepreßtes Leichtmetallprofil, kann aber ebenfalls durch einen Kunststoffstrang gebildet sein.

Die Plattform 10 ist in einer nicht näher dargestellten bekannten Weise an der Hinterkante der Ladefläche eines Lastkraftwagens heb- und senkbar sowie nach unten mit Hilfe von Hub- und Senkvorrichtungen neigbar.

## Patentansprüche

1. Ladebordwand mit einem stranggepreßten Profil in Form einer Hohlfachplatte, die zwischen einer oberen und einer unteren Profilwand durch Querwände begrenzte Hohlräume aufweist, insbesondere Ladebordwand mit sich zu einer Auflagekante verjüngendem Längsschnitt, mit wenigstens einer in der Fahrfläche vorgesehenen Rastmulde od.dgl. und einer diese in einer Ruhelage überdeckenden Sicherungsklappe als Abrollsicherung, wobei letztere quer zur Abrollrichtung zur zeitweiligen Aufnahme eines Teiles eines zu sichernden Ladegutes, beispielsweise einer Rolle, unter Verschwenken aus der Fahrfläche in dieser die Rastmulde freigibt,
dadurch gekennzeichnet,
daß die obere Profilwand (20) eine querschnittlich stufenartige Vertiefung (30) als Rastmulde aufweist, die zur unteren Profilwand (22) durch einen stranggepreßten Boden (34) begrenzt ist, wobei an die der Auflagekante (14) nähere Seitenwand (32_{f}) der Vertiefung eine hinterschnittene Nut (38) kreisförmigen Innenquerschnitts parallel angeformt ist und eine Gelenkachse für die an das Profil (12) angelenkte Sicherungsklappe/n (40) bestimmt.

2. Ladebordwand nach Anspruch 1, dadurch gekennzeichnet, daß in der Seitenwand ( 32_{f}) Einschnitte (46) vorgesehen sind, welche die hinterschnittene Nut (38) durchgreifen und zungenartige Abschnitte (44) eines Klappenprofiles (40) als Sicherungsklappe aufnehmen, deren Abschnitte einen rohrartigen Hohlraum (43) aufweisen, welcher in Einbaulage des Profiles (12) mit dem Innenquerschnitt der hinterschnittenen Nut (38) fluchtet und mit ihr von einem Achsbolzen (47) der Gelenkachse durchsetzt ist.

3. Ladebordwand nach Anspruch 1 oder 2, gekennzeichnet durch ein einstückig hergestelltes Klappenprofil (40) mit an einer Längskante verlaufender rohrartiger Anformung (42), die zur Bildung der zungenartigen Abschnitte (44) teilweise entfernt ist.

4. Ladebordwand nach Anspruch 1 bis 3, dadurch gekennzeichnet, daß die Tiefe (h) der Vertiefung (30) etwa der Dicke der oberen Profilwand (20) entspricht.

5. Ladebordwand nach einem der Ansprüche 1 bis 4, dadurch gekennzeichnet, daß mehrere Klappenprofile (40) in axialem Abstand (q) zueinander an der Gelenkachse festgelegt sind und jeweils zwischen zwei benachbarten Klappenprofilen in der Vertiefung (30) ein Einsatz (54) festgelegt ist, dessen Oberfläche (55) mit der Oberfläche (19) des Profiles (12) fluchtet.

6. Ladebordwand nach einem der Ansprüche 1 bis 5, dadurch gekennzeichnet, daß der Einsatz (54) und/oder das Klappenprofil (40) aus einer Aluminiumlegierung stranggepreßt sind/ist.

7. Ladebordwand nach einem der Ansprüche 1 bis 5, dadurch gekennzeichnet, daß der Einsatz (54) und/oder das Klappenprofil (40) aus Kunststoff gefertigt sind/ist.

8. Ladebordwand nach wenigstens einem der Ansprüche 1 bis 7, dadurch gekennzeichnet, daß zwischen Boden (34) und Klappenprofil (40) eine Dämpfungseinlage angebracht ist.

9. Ladebordwand nach Anspruch 8, dadurch gekennzeichnet, daß die Dämpfungseinlage als Dämpfungsstrang (52), beispeilsweise als Gummiprofil ausgebildet sowie im Boden (34) der Vertiefung (30) nahe der den Einschnitten (46) gegenüberliegenden Seitenwand (32) in einer Klemmnut (36) vorgesehen ist.

## Claims

1. Loading tailgate with an extruded profile in the shape of a plate having hollow box sections, having hollow spaces defined by transverse walls between an upper and a lower profile wall, especially a loading tailgate of longitudinal section tapering towards a bearing edge with at least one notch or the like provided in the running surface and a safety flap covering the latter in a rest position to safeguard against rolling off, the latter swinging out from the running surface transverse to the roll-off direction in order to release the notch for the temporary accommodation therein of part of a load to be secured, e.g. a roll, characterised in that the upper profile wall (20) has a recess (30) of stepped cross section forming the notch, defined towards the lower profile wall (22) by an extruded base (34), an undercut groove (38) of circular internal cross section being integrally moulded in parallel in the side wall (32_{f}) of the recess closer to the bearing edge (14) and determining a hinged spindle for the safety flap(s) (40) hinged on to the profile (12).

2. Loading tailgate according to claim 1, characterised in that slits (46) are provided in the side wall (32_{f}), which pass through the undercut groove (38) and accommodate tongue-shaped sections (44) of a flap profile (40) forming the safety flap, the sections of which have a tubular hollow space (43) which, in the assembling position of the profile (12), is aligned with the internal cross section of the undercut groove (38) and together therewith is traversed by a pivot pin (47) of the hinged spindle.

3. Loading tailgate according to claim 1 or claim 2, characterised by a flap profile (40) manufactured in one piece having a tubular moulded portion (42) extending along one longitudinal edge, which is partially removed in order to form the tongue-shaped sections (44).

4. Loading tailgate according to claims 1 to 3, characterised in that the depth (h) of the recess (30) corresponds approximately to the thickness of the upper profile wall (20).

5. Loading tailgate according to one of claims 1 to 4, characterised in that several flap profiles (40) are fixed to the hinged spindle at an axial distance (q) from one another and an insert (54) is fixed in the recess (30) between two adjacent flap profiles, the surface (55) of said insert being aligned with the surface (19) of the profile (12).

6. Loading tailgate according to one of claims 1 to 5, characterised in that the insert (54) and/or the flap profile (40) consist(s) of an extruded aluminium alloy.

7. Loading tailgate according to one of claims 1 to 5, characterised in that the insert (54) and/or the flap profile (40) is/are made of plastic.

8. Loading tailgate according to at least one of claims 1 to 7, characterised in that a damping insert is fitted between the base (34) and the flap profile (40).

9. Loading tailgate according to claim 8, characterised in that the damping insert is in the form of a damping extrudate (52), e.g. a rubber profile, and is provided in a clamping groove (36) in the base (34) of the recess (30) close to the side wall (32) opposite the slits (46).

## Revendications

1. Hayon élévateur comprenant un profilé filé à la presse constitué par un plateau à alvéoles qui présente des cavités délimitées par des cloisons transversales entre une paroi supérieure et une paroi inférieure du profilé, notamment hayon élévateur présentant une section longitudinale qui s'amincit vers le bord de portée, comprenant au moins un auget d'arrêt ou équivalent prévue dans la surface de passage, et un abattant de retenue qui recouvre cet auget dans la position de repos pour servir de retenue de roulement, cet abattant dégageant l'auget d'arrêt, en se soulevant, par pivotement transversalement à la direction de roulement, de la surface de passage formée dans cet auget, pour arrêter temporairement une partie d'une cargaison qu'il s'agit de retenir, par exemple d'un rouleau,
caractérisé en ce que,
la paroi supérieure (20) du profilé présente, pour former l'auget d'arrêt, un évidement (30) possédant la forme d'un gradin en section transversale, qui est isolé vis-à-vis de la paroi inférieure (22) du profilé par un fond (34) venu de filage à la presse, cependant que, le long de la paroi latérale (32_{f}) de l'évidement qui est la plus proche du bord de portée (14), est venue de matière, parallèlement à cette paroi, une rainure (38) à contre-dépouille, de section transversale intérieure circulaire, qui fixe la position d'un axe d'articulation pour le ou les abattants de retenue (40) articulés au profilé (12).

2. Hayon élévateur selon la revendication 1, caractérisé en ce que, dans la paroi latérale (32_{f}), sont prévues des encoches (46) qui traversent la rainure (38) à contre-dépouille et reçoivent des segments (44) en forme de languette appartenant à un profilé d'abattant (40) qui joue le rôle d'abattant de retenue, dont les segments présentent une cavité tubulaire (43) qui, dans la position de montage du profilé (12) est en alignement avec la section intérieure de la rainure (38) à contre-dépouille et est traversée avec elle par une broche (47) de l'axe d'articulation.

3. Hayon élévateur selon la revendication 1 ou 2, caractérisé par un profilé d'abattant (40) fabriqué en une seule pièce, comprenant une partie tubulaire (42) venue de matière qui s'étend le long d'un bord longitudinal, qui est partiellement enlevée pour former les segments (44) en forme de languette.

4. Hayon élévateur selon les revendications 1 à 3, caractérisé en ce que la profondeur (h) de l'évidement (30) correspond à peu près à l'épaisseur de la paroi supérieure (20) du profilé.

5. Hayon élévateur selon une des revendications 1 à 4, caractérisé en ce que plusieurs profilés d'abattants (40) sont fixés à l'axe d'articulation à un certain écartement axial mutuel (q) et en ce que, entre deux profilés d'abattant adjacents, est fixé dans l'évidement (30) un élément rapporté (54) dont la surface (55) est de niveau avec la surface (19) du profilé (12).

6. Hayon élévateur selon une des revendications 1 à 5, caractérisé en ce que l'élément rapporté (54) et/ou le profilé d'abattant (40) est ou sont formé(s) en alliage d'aluminium filé à la presse.

7. Hayon élévateur selon une des revendications 1 à 5, caractérisé en ce que l'élément rapporté (54) et/ou le profilé d'abattant (40) est ou sont fabriqué(s) en matière plastique.

8. Hayon élévateur selon au moins une des revendications 1 à 7, caractérisé en ce qu'une garniture amortisseuse est placée entre le fond (34) et le profilé de abattant (40).

9. Hayon élévateur selon la revendication 8, caractérisé en ce que la garniture amortisseuse est constituée par un profilé amortisseur (52), par exemple un profilé de caoutchouc, et est prévue dans le fond (34) de l'évidement (30) à proximité de la paroi latérale (32) qui est à l'opposé des encoches (46), dans une rainure d'encastrement (36).
